Europäisches Patentamt

European Patent Office

Office européen des brevets

(19)

(11) Veröffentlichungsnummer : **0 154 767**
**B1**

(12) **EUROPÄISCHE PATENTSCHRIFT**

(45) Veröffentlichungstag der Patentschrift :
06.05.87

(51) Int. Cl.⁴ : **B 65 G 67/60**, B 65 G 15/16

(21) Anmeldenummer : 85100070.3

(22) Anmeldetag : 04.01.85

(54) **Mehrgliedrige Fördereinrichtung, bestehend aus einer Aufgabevorrichtung für das Schüttgut, einem Steil- bzw. Senkrechtförderer und einem Ausleger für die Weiterleitung des Schüttgutes.**

(30) Priorität : 09.01.84 DE 3400437

(43) Veröffentlichungstag der Anmeldung :
18.09.85 Patentblatt 85/38

(45) Bekanntmachung des Hinweises auf die Patenterteilung : 06.05.87 Patentblatt 87/19

(84) Benannte Vertragsstaaten :
AT BE CH DE FR GB IT LI NL SE

(56) Entgegenhaltungen :
DE-A- 2 930 957
DE-A- 3 005 452
DE-A- 3 145 104

(73) Patentinhaber : Hartmann Fördertechnik GmbH
Kaiserleistrasse 43
D-6050 Offenbach (DE)

(72) Erfinder : Richard, Hermann
Max-Planck-Strasse 14
D-6056 Heusenstamm (DE)
Erfinder : Unland, Herman, Dipl.-Ing.
Wilhelmstrasse 7
D-6238 Hofheim (DE)
Erfinder : Ostmann, Klaus, Dipl.-Wirtsch.-Ing.
Morneweg 35
D-6100 Darmstadt (DE)

(74) Vertreter : Munderich, Paul, Dipl.-Ing.
Frankfurter Strasse 84
D-6466 Gründau-Rothenbergen (DE)

EP 0 154 767 B1

## Beschreibung

Die Erfindung betrifft eine mehrgliedrige Fördereinrichtung, bestehend aus einer Aufgabevorrichtung für das Schüttgut, einem Steil- bzw. Senkrechtförderer und einem Ausleger für die Weiterleitung des Schüttgutes, wobei das Gut innerhalb des Steilförderers mittels eines durch ein Normalband als Abdeckband abgeschlossenes Elevatorband transportierbar ist, ein einstellbarer Öffnungswinkel zwischen Steilförderer und Ausleger, d. h. zwischen den durch ihre Längserstreckung ausgewiesenen Schenkeln dieser Teile, vorgesehen ist und der Winkel durch ein an dem Steilförderer und dem Ausleger jeweils angelenktes, längenveränderliches Stellglied einstellbar ist.

Eine solche Ausbildung ist durch die DE-OS-2 930 957 bekannt.

Der durch diese Schrift ausgewiesene Anmeldungsgegenstand steht dabei im Zusatzverhältnis zu der Deutschen Patentanmeldung P-2 717 100.2.

Im einzelnen betrifft die Schrift einen Gurtbandförderer zur Förderung von Schüttgut über große Entfernungen und Höhen, bestehend aus einem auf Tragrollen gestützten endlos umlaufenden Gurtband mit ein oder mehreren, auf der gesamten Förderlänge angeordneten senkrechten Förderabschnitten, in denen das Fördergut durch Deckbänder gehalten wird.

Hauptmerkmal dieser Anmeldung ist, daß zusätzlich zu den senkrechten Förderabschnitten oder anstelle derer ein oder mehrere waagrechte ansteigende und/oder geneigte Kurvenförderabschnitte angeordnet sind, wobei eine Lösung die Förderung durch das Obertrum eines Förderbandes vorsieht, das überlicherweise zunächst durch drei Rollen gemuldet ist und im weiteren Fortgang dessen Randbereiche durch seitliche Rollen kontinuierlich bis zu 90° umgelenkt, d. h. senkrecht aufgemuldet werden. Nach weiter erfolgter beidseitiger Muldung der senkrechten Kanten am Deckband-Hintrum wird dieses übergreifend über das gemuldete Obertrum des Förderbandes geführt und dieser « Verbund » durch beidseitig anliegende Tragrollen gehalten.

In einer weiteren, Zusatzanmeldung zu der genannten Stammanmeldung, die als DE-OS-3 0-05 452 bekannt wurde, ist als Aufgabenstellung vorgesehen, daß der Förderer nach Durchfahren eines senkrechten Förderabschnittes auf der nächst höheren Förderebene in einem beliebigen Winkel zur Richtung der unteren Einlaufstrecke weitergeführt werden kann.

Im übrigen gelten die zur DE-OS-2 930 957 gegebenen Ausführungen.

Einheitlich bei dieser Gruppe ist jedoch die Aufrechterhaltung der Abdeckung des Obertrums des Fördergurtes durch das Deckband-Obertrum über die Förderstrecke bzw. zumindest über deren wesentlichen Teil.

Eine Abdeckung des Auslegers für körnige bis stückige Schüttgüter ist in der Regel nicht erforderlich und störend, da, abgesehen von unnötigem Mehraufwand, eine Sichtkontrolle der Gutförderung im Umlenkbereich verhindert wird.

Die vorgeschlagene Aufmuldung beider Bänder macht nicht nur eine zusätzliche Arbeitsleistung erforderlich, sondern sie führt auch zu einer wesentlichen Verschleißförderung der Bänder durch die ständig sich wiederholenden Biegungen der beidseitigen Randbereiche.

Des weiteren wird durch die DE-OS-3 145 104 eine Umlenkstation mit senkrechten oder waagrechten Förderzweigen ausgewiesen, die aus einem Wellkantengürt und einem diesen abschließenden Deckband besteht.

Es werden wenigstens zwei Förderabschnitte gebildet, von denen einer, relativ zum anderen, lagekonstant oder lageveränderlich ist. Das Traggerüst ist mit einer den Winkel der Bandumlenkung berücksichtigenden Stutzrollenkombination für den Bandförderer sowie für das Deckband versehen.

Das Kriterium dieser Konzeption ist die Ausbildung von Tragstationen mit einstellbarem, veränderlichem Achsabstand zwischen der Stützrolle des Wellkantengurtes und den beidseitig angeordneten Sützrollen des Deckbandbereiches.

Der Abstand zwischen Deckband und Wellenkantenband ist grundsätzlich so eingestellt, daß kein kraftübertragender Berührungskontakt zwischen den beiden Bändern möglich ist. Jede Abstützstelle sieht drei Stützrollen vor, von denen die jeweils erste und zweite Stützrolle in koaxialer Anordnung in der Regel dem Deckband und die jeweils dritte Stützrolle dem Wellenkantengurt zugeordnet sind. Im Falle des gezeichneten Beispieles sind die zum Deckband gerichteten Stützrollen ortsveränderlich und die zum Wellenkantengurt gerichteten Stützrollen fest gelagert.

An der ortsveränderlichen Lagerung greifen die Mittel für die Einstellung des Achsabstandes an.

Die drei Stützrollen jeder Rollengruppe sind also mit ihren drei Achsen, bezogen auf die Bandumlenkung, in einer gemeinsamen radialen Ebene angeordnet, d. h. die zwei kurzen Rollen stützen beidseitig die Ränder des Deckbandes, während die lange Rolle das Wellenkantenband über dessen gesamte Breite abstützt.

Als vorgesehenes Mittel zur Einstellung der ortsveränderlich gelagerten Rollen ist eine in Richtung der Ablenkung des Auslegers wirkende, gewichtsbelastete Zugstation vorgesehen, die jedoch nur den Winkel des Auslegers zum Senkrechtförderer beeinflussen kann. Es wird also nicht beidschenklig gespreizt bzw. zurückgeführt, sondern der Öffnungswinkel wird einseitig durch die Bewegung lediglich eines Schenkels eingestellt.

Dies hat eine eingeschränkte Manipulation des Förderers zur Folge. Diesen Stand der Technik berücksichtigend, ist es Aufgabe dieser Erfindung, eine mehrgliedrige Fördereinrichtung nach der eingangs beschriebenen Art zu nennen, bei der die Übergabe des zu fördernden Gutes vom Steilförderteil auf das mit diesem gelenkig verbundene Auslegerteil, bei weitgehender Vermeidung einer abrasiven Beanspruchung des Gutes, insbesondere durch Wurf, und bei geringer Staubentwicklung ermöglicht wird.

Verbunden damit soll auch während der erforderlichen Änderungen des Öffnungswinkels zwischen dem Steilförderteil und dem Auslegerteil bei Aufrechterhaltung des Fördervorganges und der oben genannten Förderbedingungen dieser ohne Nachspannung des übergebenden und/oder aufnehmenden, weiterführenden Förderbandes bei praktisch stoßfreier Veränderung der Lage beider Schenkel deren mögliche Auslenkung vergrößert und damit eine verbesserte Anpassung an die jeweiligen Betriebsbedingungen erreicht werden.

Die erfindungsgemäße Lösung dieser Aufgabe sieht vor, daß das im wesentlichen im Steilförderer vorgesehene Elevatorband und das über den Steilförderbereich und über einen Teilbereich der Umlenkung um eine zentrale Schwenkachse innerhalb der Kopfstation im Ausleger zunächst abdeckende und dann als Förderband weiterführende Normalband bei gleichsinniger Antriebsrichtung und synchroner Geschwindigkeit der beiden Bänder in einem der Höhe der Aufnahmekammern für das Gut des Elevatorbandes entsprechenden Abstand ausgebildet sind, daß zur Entleerung der am Elevatorband ausgebildeten Aufnahmekammern auf das im Ausleger geführte, hier den Obertrum bildende Normalband ein stummelförmiges, in Richtung des Auslegers weisendes, das Elevatorband umlenkendes Endteil vorgesehen ist, das vom Normalband, hierbei die Aufnahmekammern öffnend, abhebt, und daß eine Mehrgelenkvorrichtung für die Winkelverstellung der Förderglieder zueinander vorgesehen ist.

Durch diese Ausbildung wird die Verwendung eines relativ aufwendigen, mit Aufnahmekammern ausgerüsteten Elevatorbandes im wesentlichen auf den Steilförderteil beschränkt, und das bis hier abdeckende Normalband in Funktionsumkehrung über den Bereich des Auslegers als Förderband wirksam.

Die Aufnahmekammern entleeren dabei im Bereich der Elevatorbandumlenkung durch Abheben vom Deckband, so daß eineschlagartige Entleerung, und damit eine nennenswerte Staubentwicklung, vermieden wird.

Durch die zumindest über einen Teilbereich der Umlenkung noch aufrechterhaltene Abdeckung der Aufnahmekammern wird eine Rückströmung des fließenden Gutes zwischen dem Elevatorband und dem Abdeckband, und damit zusätzlicher Verschleiß vermieden sowie die Erhaltung eines besonders günstigen Förderwirkungsgrades erreicht.

Zur weiteren Optimierung des Übergabevorganges für das Gut vom Steilförderer auf den Ausleger wird vorgeschlagen, daß ein sich öffnender Winkel zwischen dem in einem Endteil durch die Umlenk- bzw. Antriebstrommel geführten, mit Aufnahmekammern ausgerüsteten Elevatorband und dem tragenden und fördernden Teil des Normalbandes im Ausleger vorgesehen ist, und daß dieser Winkel unveränderlich bestimmt ist durch die Festanordnung eines Gelenkpunktes für den Angriff einer mit der zentralen Schwenkachse verbindenden beweglichen Spreizstrebe und der Lagerung der Umlenk- bzw. Antriebstrommel.

Durch den voreingestellten, nur um wenige Winkelgrade sich öffnenden Winkel zwischen dem Endteil und der Umlenk- bzw. Antriebstrommel, die beide mit dem Ausleger in Verbindung stehen, und dem eigentlichen Ausleger erfolgt eine kontinuierliche Freigabe des Gutes aus den Kammern des Elevatorbandes über eine vorbestimmte Wegstrecke hinweg, so daß der Übergabevorgang aus den einzelnen Kammern des Elevatorbandes nicht in vollen, sondern in Teilportionen auf das Normalband im Ausleger erfolgt.

Dadurch erhält die Fördereinrichtung eine besondere Eignung für den Transport feinkörnigen Gutes, da die sukzessive Entleerung der Aufnahmekammern die Staubentwicklung weiter mindert.

Zur Ausbildung der Mehrgelenkvorrichtung für die Verstellung des Öffnungswinkels zwischen dem Steilförderer und dem Ausleger ist vorgesehen, daß die zentrale, in der Kopfstation fest angeordnete Schwenkachse einen Schwenkpunkt für ein Viergelenk bildet, wobei die Schwenkpunkte des Viergelenks, ausgehend von der zentralen Schwenkachse, rechtsdrehend verlaufend u. hierbei einen Rhombus bildend ausgebildet sind, und wobei der über die Spreizstrebe zur Schwenkachse zurückführende Schwenkpunkt in lagefester Zuordnung zum Steilförderer und über eine weitere Spreizstrebe in lagefester Zuordnung zur Achse der im Endteil vorgesehenen Umlenk- bzw. Antriebstrommel angeordnet ist, daß bei Veränderung des Öffnungswinkels zwischen Steilförderer und Ausleger durch das Stellglied der Abstand im Viergelenk zwischen der zentralen Schwenkachse und dem gegen die Mitte der Umlenkstrecke für das rücklaufende Trum des Elevatorbandes weisenden Gelenkpunkt im Falle der Vergrößerung des Öffnungswinkels gestreckt und im Falle von dessen Verringerung verkürzt wird, und daß der zur Mitte der Umlenkstrecke gerichtete Viergelenkpunkt gleichzeitig die Lage der Gelenkachse darstellt für die Verbindung der Stützrollen und der beiden mit ihren gleichachsig verbundenen Tragrahmen.

Die Verwendung des vorgeschlagenen Viergelenkes ermöglicht zusammenwirkend mit dem Stellglied, das beispielsweise ein Hubzylinder sein kann, nicht nur die Einstellung des Öffnungswinkels durch synchrone Verstellung dessen beider Schenkel, sondern- in Verbindung mit der zur Mitte der Umlenkstrecke des Obertrums des Elevatorbandes gerichteten lageveränderlichen Spitze des rhombusartigen Vieleckes, das eine Stützrolle trägt und dem die weiteren Stützrollen in den spiegelbildlich mit dieser gebildeten und verbundenen beiden Tragrahmen für die weiteren Stützrollen zugeordnet sind- auch deren stützende Nachführung entsprechend dem durch den Öffnungswinkel bestimmten Bandverlauf über die Umlenkstrecke.

Zur Definition des Bereiches der Bandumlenkung und der Bandlage innerhalb dieses Bereiches sowie zur Führung beider Bänder in einem vorbestimmten Radius um die zentrale Schwenkachse ist festzuhalten, daß der Bereich der Bandumlenkung für das zurücklaufende obenliegende Trum des Elevatorbandes zum einen durch die Umlenk- bzw. Antriebstrommel und zum anderen durch die aus Stummelrollen und Stützrollen gebildete Führungstation begrenzt ist, daß die 'Bandlage innerhalb dieser Begrenzung durch die Einstellung des gelenkig verbundenen Vieleckes bestimmt ist, und daß das aufsteigende Trum des Elevatorbandes — soweit es nicht im Endteil geführt ist — dem durch die um die zentrale Schwenkachse abstandsgleich angeordneten Stützrollen aufliegenden Normalband mit seinen Kammern ansteht.

Zur Anordnung und Führung der für die Umlenkung in der Kopfstation bzw. dem Elevatorschacht erforderlichen Tragrollen, insbesondere für das aufsteigende Trum des Elevatorbandes, wird vorgeschlagen, daß das aufsteigende Trum des Elevatorbandes durch fest in der Kopfstation oder im Elevatorschacht angeordnete, durch Träger abgestützte Tragrollen und durch beweglich im Endteil in den hier befestigten Schienen, die mit einem im Radius der Umlenkung des aufsteigenden Gurtes des Elevatorbandes und gegen dessen Bewegung gerichtet, über ca. 60-Winkelgrade sich erstreckenden, für die Führung der Tragrollen vorgesehenen Einlaufbogen versehen sind, wobei die beweglichen Tragrollen und die erste der anschließenden feststehenden Tragrollen durch Verbindungsglieder gelenkig miteinander verbunden sind, und daß je nach Einstellung des Öffnungswinkels zwischen dem Stilförderer und dem Ausleger — und zwar bei großem Winkel — ein großer Teil der feststehenden Tragrollen u. alle beweglichen Tragrollen in die Schiene eingefahren und bei kleinem Winkel zumindest ein Teil dieser Rollen ausgefahren sind und die beweglichen Rollen in der Schiene verbleiben.

Durch diese Ausbildung ist eine sichere Führung des aufsteigenden Trums des Elevatorbandes unabhängig von der Einstellung des Öffnungswinkels zwischen dem Steilförderer und dem Ausleger gesichert.

Zur Führung und Umlenkung des Normalbandes wird vorgeschlagen, daß das gegen die auf einem einheitlichen Radius angeordneten Umlenkrollen aufliegende Normalband, je eine im Steilförderer und eine im Ausleger vorgesehene, die Bahn des Normalbandes tangierende Einschnürrolle anliegt, wobei die Summe aus dem Umschlingungswinkel des Ober- und Untertrums in jeder Winkeleinstellung konstant ist.

Zur Auswahl des Elevatorbandes wird empfohlen, daß die Aufnahmekammern des Elevatorbandes rechteckige, quer zum Bandverlauf ausgerichtete, einander folgende Einzelkammern sind, deren Länge in Querrichtung zum Band derart ist, daß beidseitig ein Tragrand für den Eingriff bzw. Untergriff von Stützrollen möglich ist.

Die Erfindung wird durch die beigefügten Übersichtssystem-Darstellungen, die beispielsweise Ausführung sowie in ihrer grundsätzlichen Funktion näher erläutert.

Figur 1 zeigt die Fördereinrichtung verwendet als Schiffsentladeanlage, bestehend aus einem durch Schaufelrad beschickten Gutzuförderer zu einem durch ein Normalband abgedeckten, senkrechten oder ansteigenden Elevatorkammer- bzw. Kastenförderband gebildeten Steilförderer, wobei sich das Kastenband, im Bereich der im wesentlichen waagrechten oder geneigten Umlenkung des Normalbandes, in einen Förderband-Ausleger mit einem geringen sich öffnenden Winkel abhebt und über eine Umlenkrolle und eine nachgeordnete Umlenkvorrichtung zum Fußteil des senkrechten Förderzweiges zurückgeführt wird.

Der Ausleger ist einerseits der auf der Pier verfahrbar geführten Siloanlage, von der Horizontalen abweichend nach oben und unten, und andererseits der des den Steil- bzw. Senkrechtförderer und den Ausleger gemeinsam tragenden Umlenkwelle schwenkbar verbunden.

Figur 2 zeigt eine mögliche Führung des Förderverlaufes, wobei diese in Anlehnung an Figur 1 einer korrigierten — d. h. mit horizontal und vertikal ausgerichteten Schenkeln — umgekehrten Z-Form entspricht.

Figur 3 zeigt einen Schnitt I-I durch das vertikal ausgerichtete Kastenband mit aufliegendem, abdeckendem Normalband, die gemeinsam den senkrechten bzw. ansteigenden Förderzweig bilden.

Figur 4 zeigt einen Schnitt II-II durch den aus dem im wesentlichen waagrecht geführten Normalband gebildeten Ausleger.

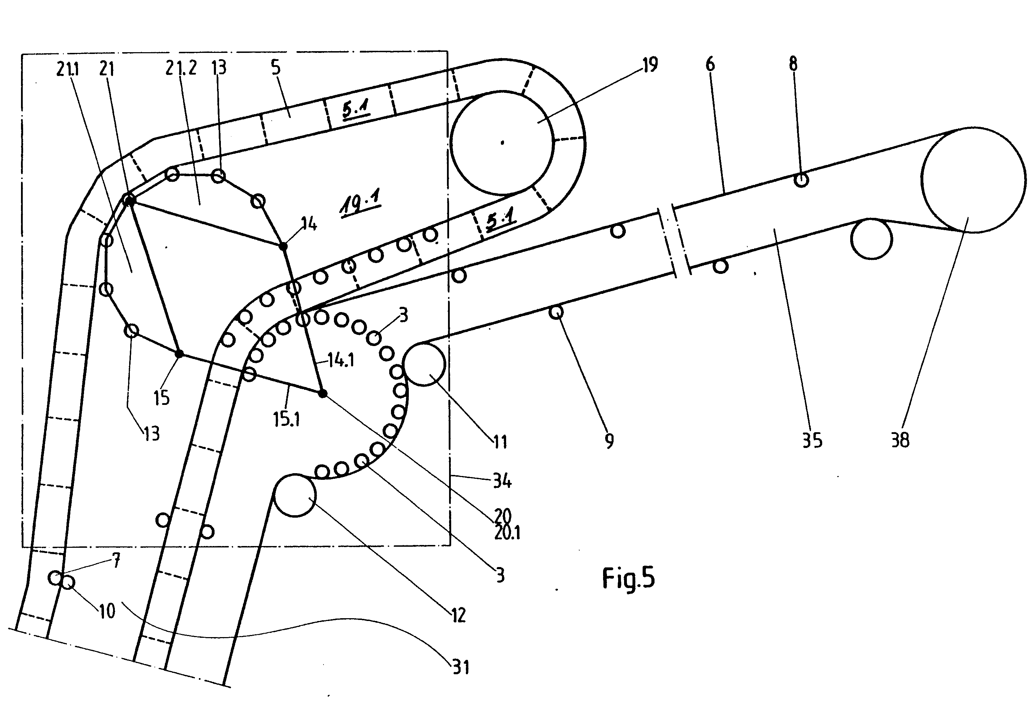

Figur 5 zeigt den Bereich der Gutumlenkung und der Gutabgabe auf den Ausleger, wobei zwischen dem durch Kasten- und Normal-band gebildeten Hubabschnitt der Förderstrecke in den lediglich durch das Normalband gebildeten Ausleger ein Öffnungswinkel von 120° eingestellt ist. In dieser Figur wird insbesondere die Lage der Tragrollen im Leertrum des Kastenbandes verdeutlicht. Diese Tragrollen sind in einem aus zwei gelenkig verbundenen gleichen Teilen bestehenden Traggestell gelagert, wobei die Stellung der beiden Traggestellteile zueinander durch ein Viergelenk entsprechend dem genannten Öffnungswinkel bestimmt ist.

Figur 6 zeigt eine gemäß der Figur 5 adäquate Darstellung, wobei der Öffnungswinkel jedoch auf 45° eingestellt ist. Es ist zu beachten, daß der Winkel zwischen dem oberen Endtrum des Kastenbandes und dem Ausleger in den Einstellungen nach Figur 5 und 6 gleich ist.

Figur 7 wiederholt im wesentlichen ebenfalls die Aussage von Figur 5, wobei im Interesse einer besseren Übersichtlichkeit auf die detaillierte Darstellung der Stützrollen des Obertrums des Kastenbandes verzichtet wird, und die Führung der Stützrollen des Untertrums des Kastenbandes hervorgehoben ist.

Figur 8 zeigt den Schnitt III-III durch Figur 7.

Figur 9 wiederholt Figur 7 bei einem Öffnungswinkel von 45°.

Figur 10 zeigt den Schnitt IV-IV durch Figur 9.

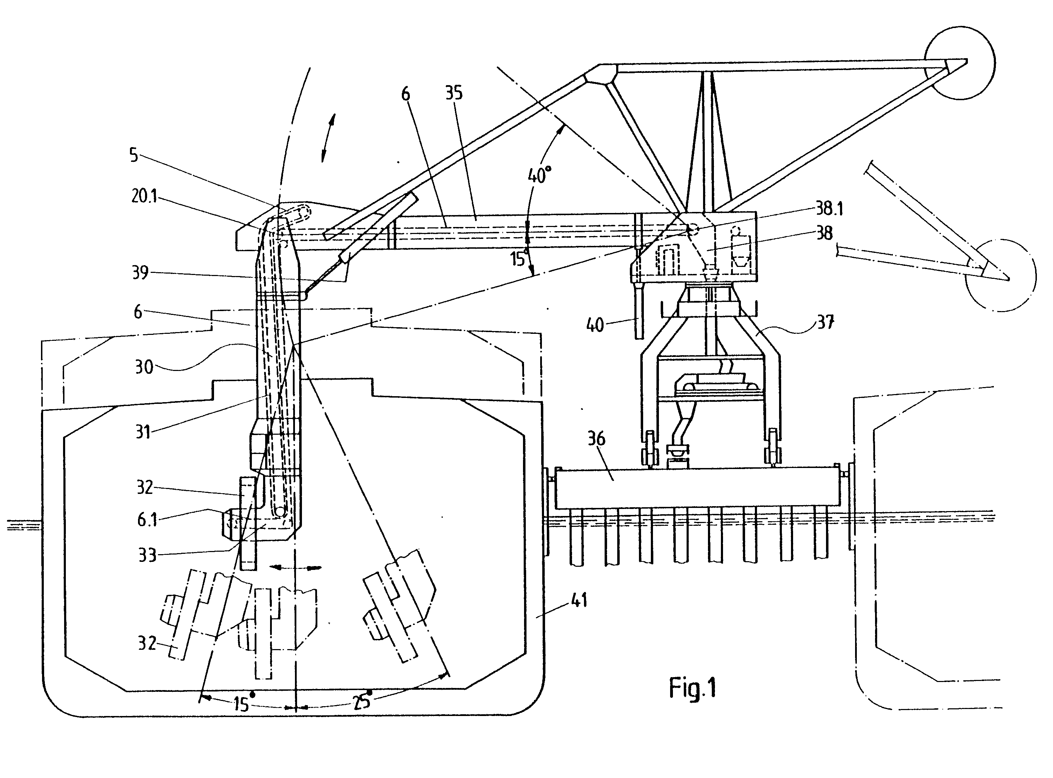

Wie durch Figur 1 ausgewiesen, wird die Fördereinrichtung 30 insbesondere auch für die Entleerung von in Schiffen einlagerndem Schüttgut verwendet. Das Gut wird dem Senkrecht- bzw. Steilförderer — nachstehend kurz lediglich Steilförderer 31 genannt — im Falle dieses Beispieles durch ein rechtwinklig zu diesem, durch ein Schöpfrad 32 beschickter u. von einem in den Steilförderer 31 überführenden Normalband 6 gebildeter Aufnahmeausleger 33 zugeführt und dessen Obergurt 6.1 im Bereich von dessen 90°-Umlenkung 6.2 durch das hier anlaufende Elevator-Kastenband 5 mit dem Kasten oder Kammern 5.1 aufgenommen.

Die Bänder 5 und 6 heben in der später näher beschriebenen Kopfstation 34 voneinander ab, wobei das Kastenband 5 eine Abgabeposition für das Gut zu dem Normalband 6 einnimmt, und in diesem Bereich eine für die Anlenkung des verschwenkbaren Auslegers 35 an die entsprechende Führung der Bänder 5/6 tragenden Welle 20.1 vorgesehen ist.

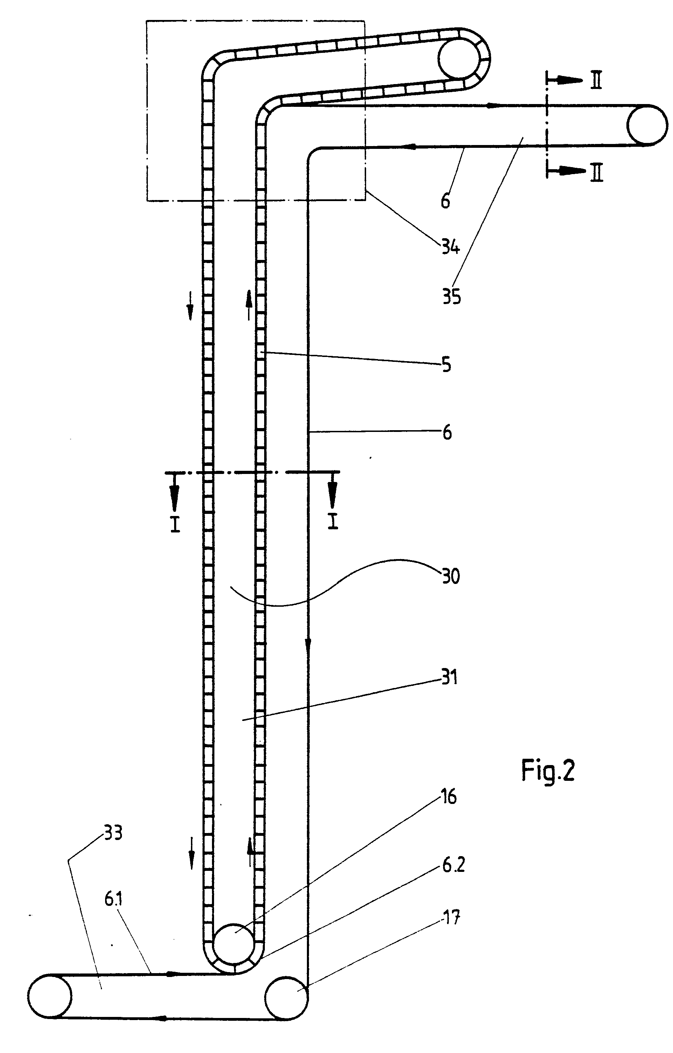

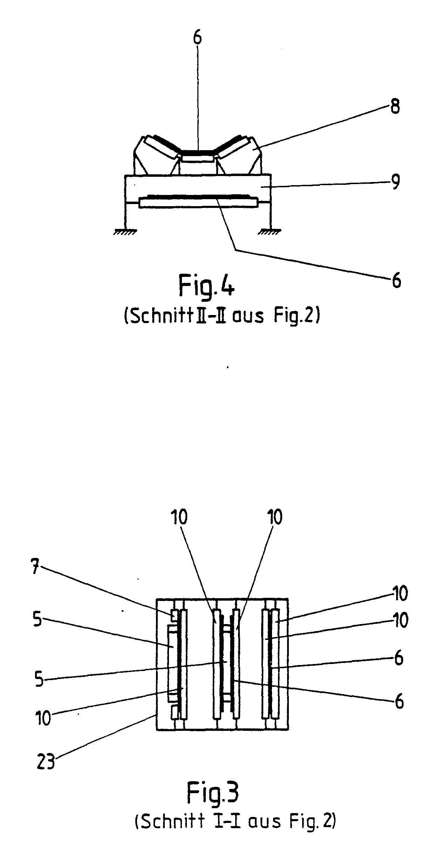

Der Ausleger 35 führt zu einer auf der Pier 36 verfahrbar geführten Siloanlage 37 und ist an dessen Einlauftrichter 38 verschwenkbar angelenkt. Durch den am Ausleger 35 befestigten Hubzylinder 39 kann der Öffnungswinkel zwischen dem Steilförderer 31 und dem Ausleger 35 — drehend um die Welle 20.1 — eingestellt werden, während der Winkel um die Anlenkachse 38.1 des Auslegers 35 am Siloeinlauftrichter 38 durch das Hubwerk 40 einstellbar ist. Durch diese Einstellmöglichkeiten des Winkels zwischen dem Steilförderer 31 und dem Ausleger 35 und des Winkels des Auslegers 35 um die Anlenkachse 38.1 am Siloeinlauftrichter 38 wird für den Steilförderer 31 ein weiter Schwenkbereich innerhalb des Schiffskörpers 41, auch bei dessen sich ändernder Eintauchtiefe, ermöglicht. Die vorzugsweise Linienführung der Fördereinrichtung 30 wird durch Figur 2 in schematischer Darstellung ausgewiesen.

Im Bereich des Steilförderers 31 wird das mit Schüttgut gefüllte Kastenband durch das Normalband 6 abgedeckt. Der Steilförderer 31 wird durch den Aufnahmeausleger 33 über dessen Obergurt 6.1 beschickt, wobei das Gut im Bereich der durch die Umlenkrollen 16 und 17 getragenen Umlenkung für die beiden Bänder 5 und 6, wie erwähnt, aufgenommen wird.

Figur 3 zeigt den Schnitt I-I durch den Steilförderer 31 in Richtung der unteren Umlenkung 6.2, d. h. in Richtung des Aufnahmeauslegers 33.

Aus dem Schnitt ist die Lage des Kastenbandes 5 im auf- und absteigenden Trum sowie die Lage des Normalbandes 6, ebenfalls im auf- und absteigenden Trum, zu entnehmen.

Das absteigende Trum des Kastenbandes 5 wird, und zwar nach außen gerichtet, durch auch anderweitig benutzte Stummelrollen 7 und nach der anderen Seite gerichtet, durch Rollen 10 geführt.

Die Führung im aufsteigenden Trum des Kastenbandes 5 und des ihm anliegenden Normalbandes 6 erfolgt durch Rollen 10 ; das absteigende Trum des Normalbandes 6 ist beiderseits ebenfalls durch Rollen 10 geführt.

Durch diese Führung der Bänder 5 und 6 innerhalb des Elevatorschachtes 23 des Steilförderers 31 ist eine exakte Abdichtung der Bänder zueinander und ein hieraus resultierender optimaler Förderwirkungsgrad gegeben.

Der durch den Ausleger 35 geführte Schnitt II-II (Fig. 4) zeigt eine dreiteilige Obergurtstation 8 sowie die Untergurtstation 9 für das Band 6.

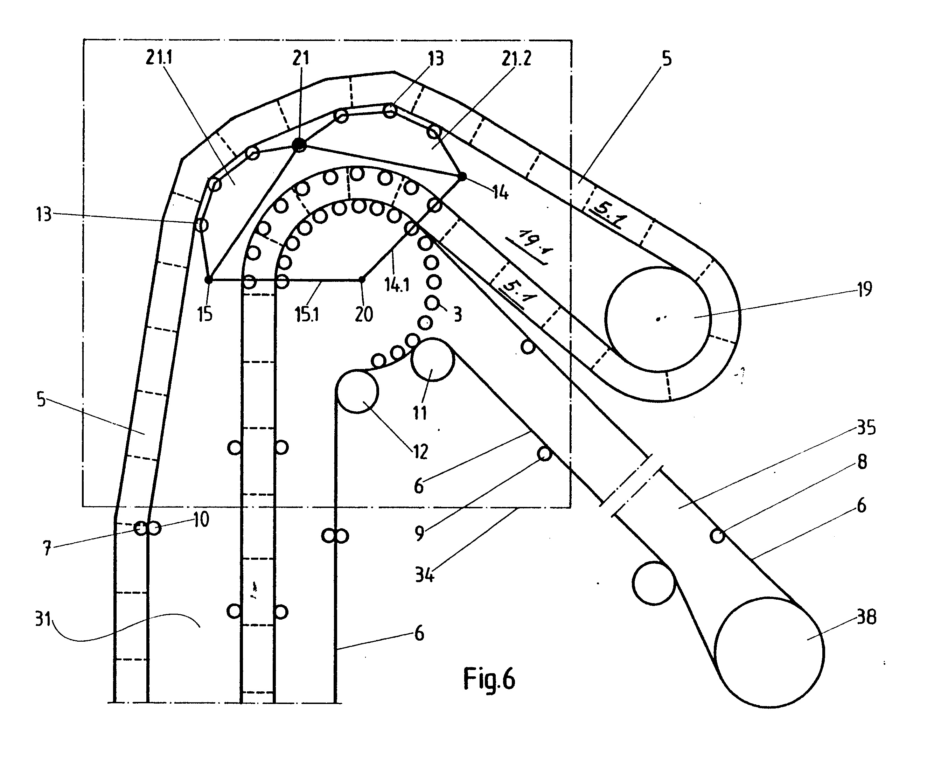

Figur 5 und 6 zeigen im wesentlichen die Ausbildung der Kopfstation 34 bei einem Öffnungswinkel zwischen Elevator und Ausleger von 120° und 45°.

Wie bereits in den einleitenden Ausführungen zu Figur 1 zum Ausdruck gebracht, ist der Öffnungswinkel zwischen dem Steilförderer 31 und dem Ausleger 35 durch einen zwischen diesen Teilen angeordneten Hubzylinder 39 um die Schwenkachse 20 bzw. der ihr zugeordneten Schwenkwelle 20. 1 einstellbar.

Das bei steigendem Ausleger 35, d. h. bei großem Öffnungswinkel zwischen den Teilen 35 und 31, sich als zu lang erweisende Obertrum des Kastenbandes 5, wird durch ein von der für beide Bänder 5 und 6 gemeinsamen Schwenkachse ausgehendes Viergelenk 20, 15, 21 und 14 (Uhrzeigersinn) durch die gegebene Streckung des Abstandes zwischen den Gelenkpunkten 20 und 21, zwischen der Antriebs trommel 19 des Kastenbandes 5 und der Einführung zur Kopfstation 34 vorgesehenen Führung 7/10 des Rücktrums des Kastenbandes 5 nach außen gespannt und die durch die im Gelenkpunkt 21 und durch diesen verbundenen zweiteiligen Tragrahmen 21.1 und 21.2 angeordneten Stützrollen 13 getragen. Vom Gelenkpunkt, d. h. der Schwenkachse 20, führt je eine Spreizstrebe 15.1 zu dem Gelenkpunkt 15 am Tragrahmen 21.1 und eine gleich lange Spreizstrebe 14.1 zu dem Gelenkpunkt 14 am Tragrahmen 21.2.

Die Länge der Sehnen zwischen den Gelenkpunkten 15 und 21 und 14 und 20 ist gleich. Der Gelenkpunkt 14 ist lagefest der Achse der im Endteil (19.1) vorgesehenen Antriebstrommel 19 und damit dem Ausleger 35 und der Gelenkpunkt 15 lagefest dem Steilförderer 31 bzw. der mit ihm verbundenen Kopfstation 34 zugeordnet.

Die Darstellung nach Figur 6 beschreibt, wie erwähnt, die Situation bei einem Öffnungswinkel von 45° zwischen dem Steilförderer 31 und dem Ausleger 35. Hierbei verringert sich der Abstand zwischen den Gelenkpunkten 20 und 21 bei entsprechender Vergrößerung des Abstandes zwischen den Gelenkpunkten 15 und 14, d. h. die beiden Traggestellteile 21.1 und 21.2 spreizen sich, so daß das Untertrum des Kastenbandes 5, gestützt durch die in den Traggestellteilen 21.1 und 21.2 geführten Führungsrollen 13, näher an die Schwenkachse bzw. an den Gelenkpunkt 20, d. h. näher an das aufsteigende Trum des Kastenbandes 5, heranrückt, und das absteigende Trum in nach außen gerichteter Neigung zu der Rollenkombination 7/10 führt.

Desweiteren wird durch die Figuren 5 und 6 die Umlenkung des Normalbandes 6 im Bereich der Kopfstation 34 erläutert.

Anstelle einer entsprechend dimensionierten Umlenkrolle sind über den Umlenkradius, und zwar in einem Winkelmaß von etwa 15°, einzelne Tragrollen 3 angeordnet, wobei das Maß der Umschlingungswinkel im Ober- und Untertrum des Normalbandes 6 bei jedem einstellbaren Öffnungswinkel zwischen dem Steilförderer 31 und dem Ausleger 35 konstant ist. Der Umschlingungswinkel des Untertrums wird durch die im Ausleger 35 angeordnete Einschnürtrommel 11 und die im Elevatorschacht 23 angeordnete Einschnürtrommel 12 entsprechend dem Öffnungswinkel zwischen den Positionen 31 und 35 begrenzt.

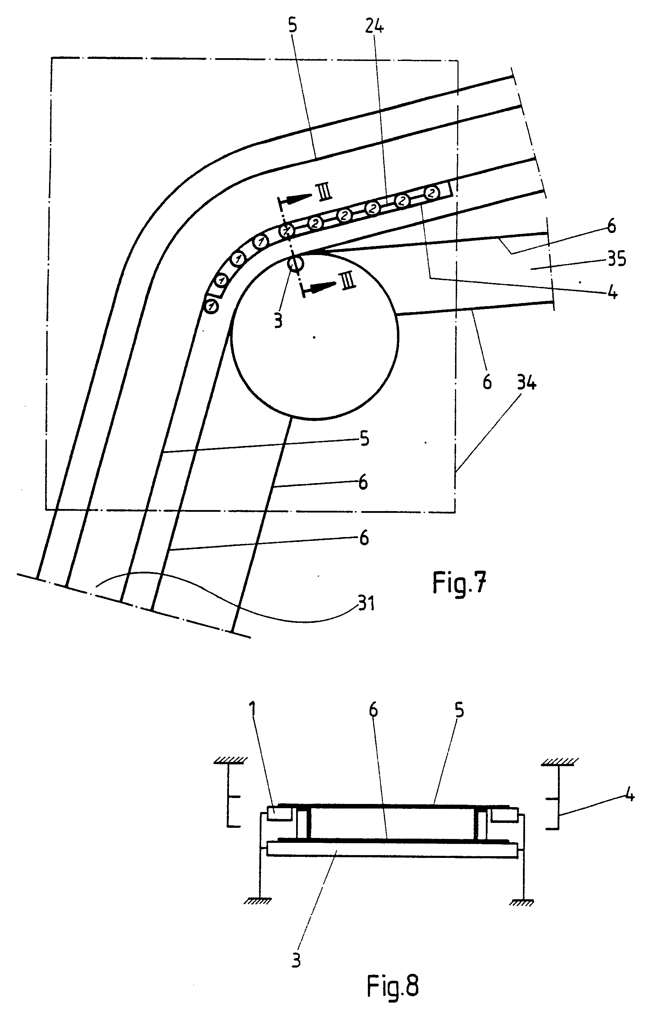

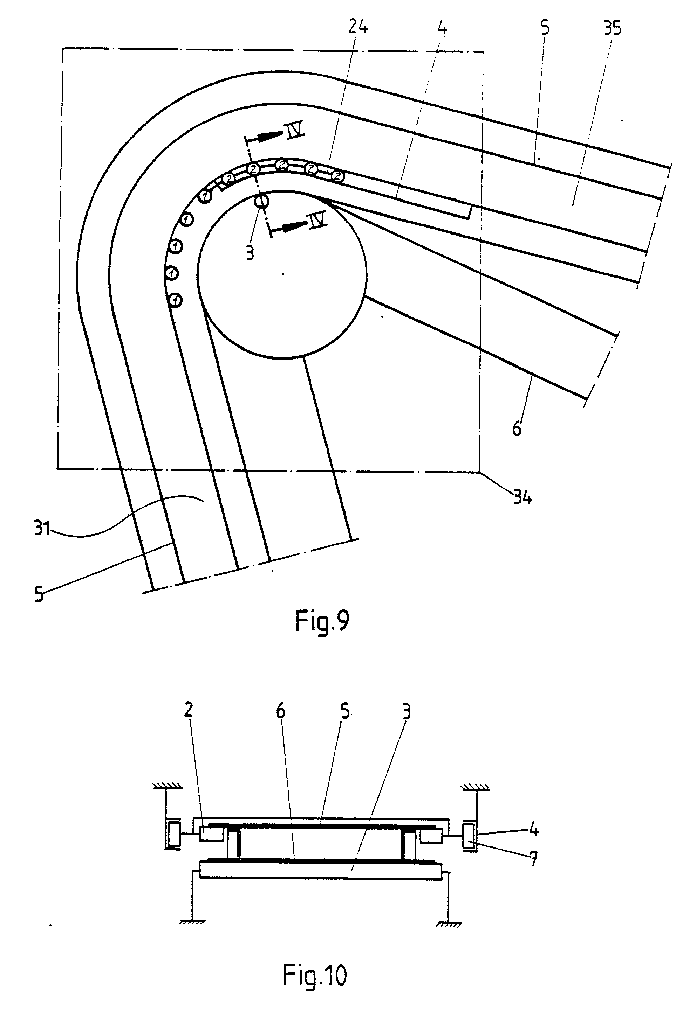

Die Figuren 7 und 9 entsprechen den Figuren 5 und 6, wobei sich diese Darstellung auf die Anordnung der fest angeordneten Tragrollen 1 und der beweglich angeordneten Tragrollen 2 für die Führung des Untertrums des Kastenbandes 6 im Elevatorgehäuse 31 bzw. der ihm verbundenen Kopfstation 34 beschränkt.

Figur 7 zeigt die Festanordnung der Tragrollen 1 parallel zum durch die Rollen 3 definierten Umlenkradius in einer Führungsschiene 4, wobei die Rollen 2 sowie die erste der entgegen der Richtung des aufsteigenden Trums des Kastenbands 5 fest angeordneten Tragrollen 1 durch Verbindungsglieder 24 miteinander verbunden sind und die im Gehäuse des Auslegers 35 angeordnete Führungsschiene 4 mit ihrem insbesondere für die Führungsrollen 2 fest angeordneten geradlinigen Teil, der jedoch anhebend, d. h. steigend, zu der Lage des Normalbandes 6 im Gehäuse des Auslegers 35, für die Entleerung des Kastenbandes 5 auf das Normalband 6 angeordnet ist.

Figur 9 wiederholt die Darstellung von Figur 5 bei einem 45° Öffnungswinkel zwischen dem Senkrechtförderer 31 und dem Ausleger 35. Wie aus dem Vergleich der Figuren 7 und 9 zu entnehmen ist, treten bei Verkleinerung des Öffnungswinkels (Figur 9) die feststehend angeordneten Tragrollen 1 ganz oder teilweise je nach Winkeleinstellung aus dem gebogenen Teil der im Auslegergehäuse befestigten Führungsschiene 4 aus.

Figur 8 zeigt im Schnitt III-III durch Figur 7 die Festanordnung der Tragrollen 1 und 3 zur Führung des Kastenbandes 5 im Elevatorschacht 31 bzw. der Kopfstation 34.

Figur 10 zeigt in einem Schnitt IV-IV durch Figur 9 die Anordnung der beweglichen Tragrollen 2 im Ausleger 35, abgestützt durch die Führungsrollen 7, sowie die stationär im Elevatorschacht 31 angeordneten Führungsrollen für das vorlaufende Trum des Normal-bandes 6.

**Patentansprüche**

1. Mehrgliedrige Fördereinrichtung, bestehend aus einer Aufgabevorrichtung für das Schüttgut, einem Steil- bzw. Senkrechtförderer (31) und einem Ausleger (35) für die Weiterleitung des Schüttgutes, wobei das Gut innerhalb des Steilförderers (31) mittels eines durch ein Normalband (6) als Abdeckband abgeschlossenes Elevatorband (5) transportierbar ist, ein einstellbarer Öffnungswinkel zwischen Steilförderer (31) und Ausleger (35), d. h. zwischen den durch ihre Längserstreckung ausgewiesenen Schenkeln dieser Teile, vorgesehen ist und der Winkel durch ein an dem Steilförderer (31) und dem Ausleger (35) jeweils angelenktes, längenveränderliches Stellglied einstellbar ist, dadurch gekennzeichnet, daß das im wesentlichen im Steilförderer (31) vorgesehene Elevatorband (5) und das über den Steilförderbereich und über einen Teilbereich der Umlenkung um eine zentrale Schwenkachse (20) innerhalb der Kopfstation (34) im Ausleger (35) zunächst abdeckende und dann als Förderband weiterführende Normalband (6) bei gleichsinniger Antriebsrichtung und synchroner Geschwindigkeit der beiden Bänder (5 und 6) in einem der Höhe der Aufnahmekammern (5. 1) für das Gut des Elevatorbandes (5) entsprechenden Abstand ausgebildet sind, daß zur Entleerung der am Elevatorband (5) ausgebildeten Aufnahmekammern (5. 1) auf das im Ausleger (35) geführte, hier den Obertrum bildende Normalband (6) ein stummelförmiges, in Richtung des Auslegers (35) weisendes, das Elevatorband (5) umlenkendes Endteil (19. 1) vorgesehen ist, das vom Normalband (6), hierbei die Aufnahmekammern (5. 1) öffnend, abhebt, und daß eine Mehrgelenkvorrichtung für die Winkelverstellung der Förderglieder zueinander vorgesehen ist.

2. Fördereinrichtung nach Anspruch 1, dadurch gekennzeichnet, daß ein sich öffnender Winkel zwischen dem in einem Endteil (19.1) durch die Umlenk- bzw. Antriebstrommel (19) geführten, mit Aufnahmekammern (5.1) ausgerüsteten Elevatorband (5) und dem tragenden und fördernden Teil des Normalbandes (6) im Ausleger (35) vorgesehen ist, und daß dieser Winkel unveränderlich bestimmt ist durch die Festanordnung eines Gelenkpunktes (14) für den Angriff einer mit der zentralen Schwenkachse (20) verbindenden beweglichen Spreizstrebe (14.1) und der Lagerung der Umlenk- bzw. Antriebstrommel (19).

3. Fördereinrichtung nach Anspruch 2, dadurch gekennzeichnet, daß die zentrale, in der Kopfstation (34) fest angeordnete Schwenkachse (20) einen Schwenkpunkt für ein Viergelenk (20, 15, 21, 14) bildet, wobei die Schwenkpunkte des Vierzelenks, ausgehend von der zentralen Schwenkachse (20), rechtsdrehend verlaufend u. hierbei einen Rhombus bildend ausgebildet sind, und wobei der über die Spreizstrebe (15.1) zur Schwenkachse (20) zurückführende Schwenkpunkt (15) in lagefester Zuordnung zum Steilförderer (31) und über die Spreizstrebe (14.1) in lagefester Zuordnung zur Achse der im Endteil (19.1) vorgesehenen Umlenk- bzw. Antriebstrommel (19) angeordnet ist, daß bei Veränderung des Öffnungswinkels zwischen Steilförderer (31) und Ausleger (35) durch das Stellglied (39) der Abstand im Viergelenk (20, 15, 21, 14) zwischen der zentralen Schwenkachse (20) und dem gegen die Mitte der Umlenkstrecke für das rücklaufende Trum des Elevatorbandes (5) weisenden Gelenkpunkt (21) im Falle der Vergrößerung des Öffnungswinkels gestreckt und im Falle von dessen Verringerung verkürzt wird, und daß der zur Mitte der Umlenkstrecke gerichtete Viergelenkpunkt (21) gleichzeitig die Lage der Gelenkachse darstellt für die Verbindung der Stützrollen (13) und der beiden mit ihner gleichachsig verbundenen Tragrahmen (21.1 und 21.2).

4. Fördereinrichtung nach einem der Ansprüche 1 bis 3, dadurch gekennzeichnet, daß der Bereich der Bandumlenkung für das zurücklaufende obenliegende Trum des Elevator-bandes (5) zum einen durch die Umlenk- bzw. Antriebstrommel (19) und zum anderen durch die aus Stummelrollen (7) und Stützrollen (10) gebildete Führungstation (7/10) begrenzt ist, daß die Bandlage innerhalb dieser Begrenzung durch die Einstellung des gelenkig verbundenen Vieleckes (20, 15, 21, 14) bestimmt ist, und daß das aufsteigende Trum des Elevatorbandes (5) — soweit es nicht im Endteil (19.1) geführt ist — dem durch die um die zentrale Schwenkachse (20) abstandsgleich angeordneten Stützrollen (3) aufliegenden Normalband (6) mit seinen Kammern (5.1) ansteht.

5. Fördereinrichtung nach einem der Ansprüche 1 bis 4, dadurch gekennzeichnet, daß das aufsteigende Trum des Elevatorbandes (5) durch fest in der Kopfstation (34) oder im Elevatorschacht (23) angeordnete, durch Träger abgestützte Tragrollen (1) und durch beweglich im Endteil (19.1) in den hier befestigten Schienen (4), die mit einem im Radius der Umlenkung des aufsteigenden Gurtes des Elevatorbandes (5) und gegen dessen Bewegung gerichtet, über ca. 60-Winkelgrade sich erstreckenden, für die Führung der Tragrollen (1) und (2) vorgesehenen Einlaufbogen versehen sind, geführt ist wobei die beweglichen Tragrollen (2) und die erste der anschließenden feststehenden Tragrollen (1) durch Verbindungsglieder (24) gelenkig miteinander verbunden sind, und daß je nach Einstellung des Öffnungswinkels zwischen dem Steilförderer (31) und dem Ausleger (35) — und zwar bei großem Winkel — ein großer Teil der feststehenden Tragrollen (1) und alle beweglichen Tragrollen (2) in die Schiene (4) eingefahren und bei kleinem Winkel zumindest ein Teil der Rollen (1) ausgefahren sind und die beweglichen Rollen (2) in der Schiene (4) verbleiben.

6. Fördereinrichtung nach einem der Ansprüche 1 bis 5, dadurch gekennzeichnet, daß dem Normalband (6), entgegen der Wirkung der auf einem einheitlichen Radius angeordneten Umlenkrollen (3), je eine im Steilförderer (31) und eine im Ausleger (35) vorgesehene, die Bahn des Normalbandes (6) tangierende Einschnürrolle (12/11) anliegt, wobei die Summe aus dem Umschlingungswinkel des Ober- und Untertrums in jeder Winkeleinstellung konstant ist.

7. Fördereinrichtung nach Anspruch 1, dadurch gekennzeichnet, daß die Aufnahmekammern des Elevatorbandes (5) rechteckige, quer zum Bandverlauf ausgerichtete, einander folgende Einzelkammern (5.1) sind, deren Länge in Querrichtung zum Band derart ist, daß beidseitig ein Tragrand für den Eingriff bzw. Untergriff von Stützrollen möglich ist.

## Claims

1. Multi-element conveyor system, consisting of a feeding device for the bulk material, a high-angle or vertical conveyor (31) and an arm (35) for onward transportation of the bulk material, the latter being conveyable within the vertical conveyor (31) by means of an elevator band (5) closed by a standard band (6) as covering band, and an adjustable angle being provided between the vertical conveyor (31) and the arm (35), i.e. between the legs of these parts constituted by their longitudinal extension, the angle being adjustable by a control element variable in length pivotally connected with the vertical conveyor (31) and the arm (35), characterized in that the elevator band (5) provided essentially in the vertical conveyor (31) and the standard band (6), which has at first, i. e. within the elevating area and over part of the turning around a central swivelling axis (20) in the head (34) in the arm (35), a covering function, then to continue as conveyor belt, with equidirectional drive and synchronous speed of the two bands (5 and 6), have a space between them corresponding to the height of the receiving chambers (5.1) for the material from the elevator band (5), that for emptying the receiving chambers (5.1) provided on the elevato band (5) onto the standard band (6) running in the arm (35), forming there the top run, a final stub section (19.1) extending in the direction of the arm (35) and deflecting the elevator band (5) is provided, which lifts from the standard band (6), thereby opening the receiving chambers (5.1), and that a multijoint device for angular adjustment of the conveyor elements in respect of one another is provided.

2. Conveyor system according to claim 1, characterized in that an opening angle is provided between the elevator band (5) guided in a final section (19.1) by the deflecting or drive drum (19) and provided with reception chambers (5.1.), and the carrying and conveying part of the standard band (6) in the arm (35), and that this angle is determined in a constant manner by the fixed provision of a fulcrum (14) for engagement by a movable expansion brace (14.1) connecting with the central swivelling axis (20) and the bearing of the deflecting or drive drum (19).

3. Conveyor system according to claim 2, characterized in that the swivelling axis (20) arranged fixedly in the head (34) forms a pivot for a four-bar link (20, 15, 21, 14), the pivots of which, starting from the central swivelling axis (20) being formed to move clockwise, thereby forming a rhombus, and the pivot (15) leading back via the brace (15.1) to the swivelling axis (20) being arranged in stationary coordination to the axis of the deflecting or drive drum (19) disposed in the final section (19.1), that changement of the angle between the high-angle conveyor (31) and the arm (35) by the control element (39) causes the distance in the four-bar link (20, 15, 21, 14) between the central swivelling axis (20) and the pivot (21) pointing towards the middle of the corner segment of the returning strand of the elevator band (5) in case of enlargement of the angle to be extended and in case of reduction of the angle to be shortened, and that the fulcrum (21) of the four-bar link located towards the middle of the corner segment represents at the same time the position of the axis of the joint for the connection of the idler pulleys (13) and the two supporting frames (21.1 and 21.2) connected with them equiaxially.

4. Conveyor system according to one of claims 1 to 3, characterized in that the corner section for the returning upper strand of the elevator band (5) is limited on one hand by the deflecting or drive drum (19) and on the other by the guide station (7/10) consisting of the stub pulley (7) and the idler pulleys (10), that the position of the band within this limitation is determined by adjustment of the articulated polygon (20, 15, 21, 14), and that the rising strand of the elevator band (5) — as far as not running through the final segment (19.1) — is abut to the standard band (6) with its chambers (5.1) which rests thereon due to the idler pulleys (3) arranged equidistantly around the central swivelling axis (20).

5. Conveyor system according to one of claims 1 to 4, characterized in that the rising strand of the elevator band (5) is guided by idler pulleys (1) firmly attached in the head (34) or in the elevator well (23) and supported by beams and by idler pulleys (2) movably arranged in the rails (4) fastened in the final section (19.1), the rails being provided with an entrance curve for guiding the idler pulleys (1 and 2) extending over 60 angular degrees in the radius of the turning of the rising belt of the elevator band (5) and contrary to the latter's motion, the movable idler pulleys (2) and the first one of the stationary idler pulleys (1) arranged next to them being articulated to one another by links (24), and, that depending on the setting of the angle between the high-angle conveyor (31) and the arm (35), in a large angle a large part of the stationary idler pulleys (1) and all mobile idler pulleys (2) are in engagement with the rail (4), and in a small angle at least part of the pulleys (1) are retracted, while the mobile pulleys (2) remain in the rail (4).

6. Conveyor system according to one of claims 1 to 5, characterized in that one snub pulley (12/11) each provided in the high-angle conveyor (31) and the arm (35), and counteracting the deflecting pulleys (3) arranged on a common radius, and touching the path of the standard band (6) rests against the standard band (6), the sum of the angle of contact of the upper strand and the lower strand remaining constant in any angular position.

7. Conveyor system according to claim 1, characterized in that the reception chambers of the elevator band (5) are individual rectangular consecutive chambers (5.1) arranged transversely to the course of the band, their length transversely to the band being such as to permit provision on both sides of a supporting rim for engagement or engagement from below by idler pulleys.

**Revendications**

1. Système convoyeur à éléments multiples, consistant d'un dispositif de chargement pour la matière en tas, d'un transporteur élévateur resp. vertical (31) et d'un bras (35) pour le transport de la matière en tas, celle-ci étant transportable à l'intérieur du transporteur élévateur (31) au moyen d'une courroie élévatrice (5) fermée par une courroie standard (6) servant de bande couvrante, un angle réglable étant prévu entre le transporteur élévateur (31) et le bras (35), c.-à-d. entre les branches données par l'extension longitudinale de ces parties, l'angle étant réglable par un organe de réglage variable en longueur et joint de manière articulée au transporteur élévateur (31) resp. au bras (35), caractérisé en ce que la courroie élévatrice (5) prévue essentiellement dans le transporteur élévateur (31) et la courroie standard (6), celle-ci étant d'abord, dans la zone convoyeuse ascendante et sur une partie de la zone de renversement par un pivot central (20) à l'intérieur de la tête (34) dans le bras (35), de fonction couvrante et après continuant comme bande de transport, sont disposées, avec même sens de propulsion et vitesse synchrone des deux courroies (5 et 6), à un écartement correspondant à la hauteur des chambres (5.1) à recevoir la matière convoyée par la courroie élévatrice (5), que, pour le vidage des chambres réceptrices (5.1) formées sur la courroie élévatrice (5), sur la courroie standard (6) conduite dans le bras (35) et formant là le brin supérieur, une section finale (19.1) de forme tronçon, s'étendant dans la direction du bras (35) et renversant la courroie élévatrice (5), est prévue, s'élevant de la courroie standard (6) en ouvrant les chambres réceptrices (5.1), et qu'un dispositif à éléments articulés multiples est prévu pour le réglage de l'angle des éléments convoyeurs l'un envers l'autre.

2. Système convoyeur selon la revendication 1, caractérisé en ce qu'un angle qui s'ouvre est prévu entre la courroie élévatrice (5) conduite dans une section finale (19.1) par la poulie de renvoi resp. de propulsion (19) et pourvue de chambres réceptrices (5.1) et la partie portante et convoyante de la courroie standard (6) dans le bras (35), et que cet angle est déterminé de façon invariable par l'arrangement fixe d'un point d'articulation (14) pour l'attaque d'un étrésillon mobile (14.1) connectant avec un pivot central (20) et le logement de la poulie de renvoi resp. de propulsion (19).

3. Système convoyeur selon la revendication 2, caractérisé en ce que le pivot central (20) arrangé de manière fixe dans la tête (3) forme un pivot pour un élément à quatre joints articulés (20, 15, 21, 14), dont les pivots, en partant du pivot central (20), sont arrangés de manière à former, tout en rotant à droite, un rhombe, le pivot (15), reconduisant par l'étrésillon (15.1) au pivot (20), étant arrangé en coordination fixe au transporteur élévateur (31), et, par l'étrésillon (14.1), en coordination fixe à l'axe de la poulie de renvoi resp. de propulsion (19) prévue dans la section finale (19.1), que, quand l'angle entre le transporteur élévateur (31) et le bras (35) est changé au moyen de l'élément de réglage (39), l'espace dans l'élément à quatre joints articulés (20, 15, 21, 14) entre le pivot central (20) et le point d'articulation (21) se trouvant vis-à-vis du milieu de la voie de renversement du brin retournant de la courroie élévatrice (5) en cas d'enlargement de l'angle est étendu, et en cas de diminution de l'angle est raccourci, et que le point articulé (21) de l'élément à quatre joints représente en même temps la position de l'axe d'articulation pour la connection des rouleaux d'appui (13) et des deux cadres porteurs (21.1 et 21.2) joints aux derniers de manière équiaxe.

4. Système convoyeur selon une des revendications 1 à 3, caractérisé en ce que la zone de renversement du brin supérieur retournant de la courroie élévatrice (5) est limitée d'une part par la poulie de renvoi resp. de propulsion (19) et de l'autre part par la station de guidage (7/10) formée par les poulies en tronçon (7) et les rouleaux d'appui (10), que la position de la courroie dans cette limitation est déterminée par le réglage du polygone articulé (20, 15, 21, 14), et que le brin ascendant de la courroie élévatrice (5), en tant que ne pas être conduit dans la section finale (19.1), est contigu à la courroie standard (6) avec ses chambres (15.1) s'y appuyant au moyen des rouleaux d'appui (3) arrangés équidistantement autour du pivot central (20).

5. Système convoyeur selon une des revendications 1 à 4, caractérisé en ce que le brin ascendant de la courroie élévatrice (5) est conduit par des rouleaux supporteurs (1) arrangés de manière fixe dans la tête (34) ou dans la colonne de l'élévateur (23) et appuyés par des supports, et par des rouleaux supporteurs (2) arrangés de manière mobile dans la section finale (19.1) dans des glissières (4) y attachées et pourvues d'un arc d'entrée pour le guidage des rouleaux supporteurs (1) et (2) s'étendant sur 60 degrés angulaires dans le rayon de la zone de renversement du brin ascendant de la courroie élévatrice (5) et contre le mouvement de la dernière, les rouleaux supporteurs mobiles (2) et la première des rouleaux supporteurs fixes (1) étant reliés de façon articulée par des éléments de connection (24), et que, selon l'écartement de l'angle entre le transporteur élévateur (31) et le bras (35), en cas d'écartement large une grande partie des rouleaux supporteurs fixes (1) et tous les rouleaux supporteurs mobiles (2) se trouvent dans la glissière (4), et, en cas d'écartement réduit, au moins une partie des rouleaux (1) est retirée de la glissière (4), tandis que les rouleaux mobiles (2) y restent.

6. Système convoyeur selon une des revendications 1 à 5, caractérisé en ce que deux rouleaux de contrainte (12/11), dont un disposé dans le transporteur élévateur (31) et l'autre dans le bras (35), contraires à l'action des poulies de renvoi (3) disposés sur un rayon uniforme, s'appuient contre la courroie standard (6) et touchent à la voie de la courroie standard (6), la somme résultant de l'angle de contact du brin supérieur et du brin inférieur étant constante dans toute position d'angle.

7. Système convoyeur selon la revendication 1, caractérisé en ce que les chambres réceptrices de la courroie élévatrice (5) sont des chambres individuelles rectangulaires consécutives (5.1) alignées transversalement à la direction de la courroie et d'une longueur transversale à la courroie à rendre possible de prévoir sur les deux côtés un bord pour l'attaque resp. l'attaque par dessous de rouleaux supporteurs.

0 154 767

Fig.1

0 154 767

Fig.2

Fig.4

(Schnitt II-II aus Fig.2)

Fig.3

(Schnitt I-I aus Fig.2)

Fig.5

Fig.6

0 154 767

Fig.7

Fig.8

Fig.9

Fig.10